(19) Europäisches Patentamt

European Patent Office

Office européen des brevets

(11) Veröffentlichungsnummer: **0 357 117**
**A1**

(12) **EUROPÄISCHE PATENTANMELDUNG**

(21) Anmeldenummer: **89202043.9**

(22) Anmeldetag: **25.07.89**

(51) Int. Cl.⁵: **G02F 1/134**

(30) Priorität: **29.07.88 DE 3825844**

(43) Veröffentlichungstag der Anmeldung:
**07.03.90 Patentblatt 90/10**

(84) Benannte Vertragsstaaten:
**ES**

(71) Anmelder: **Nokia Unterhaltungselektronik**
**(Deutschland) GmbH**
**Östliche Karl-Friedrich-Strasse 132**
**D-7530 Pforzheim(DE)**

(72) Erfinder: **Brosig, Stefan Dr.**
**Teckstrasse 51 b**
**D-7000 Stuttgart(DE)**

(54) **Flüssigkristalldisplay ohne sichtbare Zwischenräume zwischen benachbarten Bildelementen.**

㊼ Es wird ein Flüssigkristalldisplay angegeben, dessen streifenförmig angeordnete Elektroden (E) abwechselnd und auf Lücke in mehreren übereinanderliegenden Schichten (US, OS) eingelagert sind. Dadurch verschwinden die bei herkömmlichen Flüssigkristalldisplays vorhandenen, nicht steuerbaren Flächenteile, die von den zwischen den einzelnen, in einer Ebene liegenden Elektroden (E) zur elektrischen Isolation notwendigen Zwischenräumen herrühren. Bildauflösung und Kontrast werden erhöht. Vorteile ergeben sich auch bei der Kontaktierung der in den einzelnen Schichten (US, OS) weniger dicht angeordneten Elektroden.

EP 0 357 117 A1

Fig. 1

## Flüssigkristalldisplay ohne sichtbare Zwischenräume zwischen benachbarten Bildelementen

Die Erfindung betrifft ein Flüssigkristalldisplay gemäß dem Oberbegriff des Patentanspruchs 1.

Flüssigkristalldisplays sind seit längerer Zeit bekannt. Ihr Aufbau und ihre Funktionsweise sind z.B. in der Schriftenreihe "Kontakt + Studium" der Technischen Akademie Esslingen, erschienen im expert-verlag, 7031 Grafenau, in Band 16, Kapitel 8.7 beschrieben.

Um eine Matrix aus Bildpunkten herzustellen, werden zwei mit transparenten, streifenförmigen Elektroden versehene Substratplatten so zusammengefügt, daß die Längsrichtungen der Elektrodenstreifen sich unter einem Winkel von 90° schneiden. Durch Anlegen einer elektrischen Spannung an zwei auf unterschiedlichen Substratplatten angeordnete Elektrodenstreifen wird im Kreuzungsbereich der beiden mit Spannung beaufschlagten Elektrodenstreifen befindliche, flüssigkristalline Substanz durch das dort wirksame elektrische Feld aktiviert, wobei sich bestimmte optische Eigenschaften dieser Substanz infolge Umorientierung der Flüssigkristalle verändern. Von diesen optischen Eigenschaften wird meist die der Drehung der Polarisationsrichtung hindurchtretenden Lichtes dazu ausgenutzt, Licht elektrisch zu beeinflussen. Auf den Außenflächen der Substratplatten aufgebrachte Polarisatorschichten ermöglichen es dabei, einzelne, die Bildpunkte darstellende Kreuzungsbereiche mit Hilfe angelegter Spannung durchsichtig oder undurchsichtig zu steuern.

Heute erhältliche Displays zeigen sichtbare Zwischenräume zwischen den einzelnen Bildpunkten, die die Bildauflösung und den Kontrast herabsetzen. Diese Zwischenräume rühren von zwischen den Elektrodenstreifen verlaufenden, nicht mit Elektrodenmaterial beschichteten Bereichen her, die der elektrischen Isolation der Elektrodenstreifen voneinander dienen. Diese Bereiche werden aus einer anfangs zusammenhängenden Schicht aus Elektrodenmaterial herausgeätzt und weisen deshalb eine bestimmte Mindestbreite auf. Entlang dieser unbeschichteten Bereiche beider Substratplatten läßt sich kein elektrisches Feld anlegen, die flüssigkristalline Substanz somit nicht beeinflussen. Wie leicht einzusehen ist, nehmen diese "toten" Bereiche einen um so größeren Anteil der Displayfläche ein, je feiner die Bildpunktaufteilung gewählt wird. Höhere Bildauflösung ist daher mit einer starken Abnahme des Kontrastes verbunden.

Es ist Aufgabe der Erfindung, den Aufbau für ein Flüssigkeitsdisplay der o.g. Art anzugeben, das einen höheren Kontrast und eine höhere Bildauflösung besitzt als bekannte derartige Displays.

Diese Aufgabe wird durch die im kennzeichnenden Teil des Patentanspruchs 1 angegebenen Merkmale gelöst.

Durch wechselweise Anordnung der Elektrodenstreifen jeder Substratplatte in mehreren, z.B. zwei übereinanderliegenden Schichten entfällt die Notwendigkeit eines durch Ätzung erzeugten, sichtbaren Isolierbereiches zwischen zwei benachbarten Elektrodenstreifen, so daß diese in den übereinanderliegenden Schichten jeweils genau auf Lücke angeordnet werden können. Der vertikale Abstand der übereinander liegenden Schichten, der nur etwa ein Tausendstel der Elektrodenstreifenbreite beträgt, fällt dabei weder optisch noch elektrisch ins Gewicht.

Bei einer solchen Anordnung ist es möglich, Bildpunkte wesentlich dichter anzuordnen als bei herkömmlichen derartigen Displays, ohne daß damit ein nennenswerter Verlust an Kontrast verbunden ist.

Eine Weiterbildung des Flüssigkristralldisplays nach der Erfindung ist im Patentanspruch 2 beschrieben und gibt eine Möglichkeit zur Gestaltung des Randbereichs des Display an, die eine einfache Kontaktierung der Elektrodenstreifen ermöglicht.

Anhand mehrerer Figuren soll nun ein Ausführungsbeispiel des Flüssigkristalldisplays nach der Erfindung ausführlich beschrieben werden.

Die Figuren zeigen im einzelnen:

Fig. 1 Prinzip und Aufbau einer Flüssigkristallzelle nach dem Stand der Technik;

Fig. 2 Schnitt durch eine Substratplatte eines herkömmlichen Flüssigkristalldisplays, quer zur Längsrichtung der Elektrodenstreifen;

Fig. 3 Aufteilung der steuerbaren und nicht steuerbaren Bereiche eines herkömmlichen matrixartigen Flüssigkristalldisplays;

Fig. 4 Schnitt durch eine Substratplatte eines Flüssigkristalldisplays nach der Erfindung;

Fig. 5 Aufteilung der steuerbaren Bereiche eines Flüssigkristalldisplays nach der Erfindung;

Fig. 6 Kontaktierungsbereiche einer Substratplatte eines Flüssigkristalldisplays bei zweiseitiger Kontaktierung;

Fig. 7 Kontaktierungsbereiche einer Substratplatte eines Flüssigkristalldisplays bei einseitiger Kontaktierung.

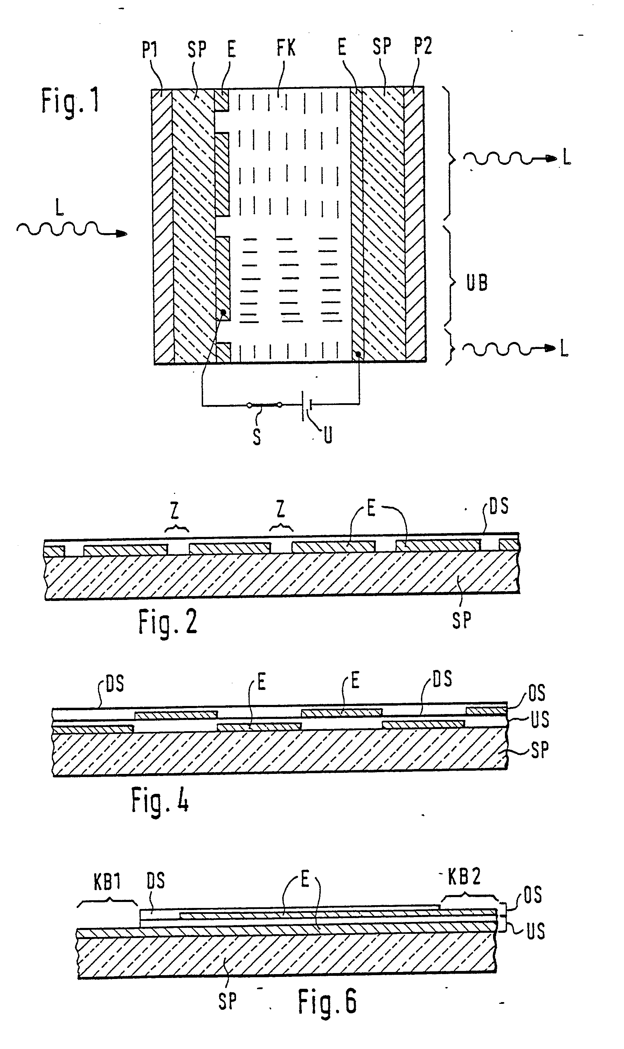

In Fig. 1 ist das Prinzip und der Aufbau einer bekannten Flüssigkristallzelle dargestellt.

Zwischen zwei planparallelen, durchsichtigen Substratplatten SP, die meist aus Glas bestehen und auf ihren einander zugewandten Oberflächen Elektroden E aus einem optisch transparenten, jedoch elektrisch leitfähigem Material, z.B. Indium-Zinnoxid (ITO) und darüber meist noch eine dünne, in der Figur nicht dargestellte Orientierungsschichtragen, befindet sich eine flüssigkristalline Substanz FK. Diese hat die Eigenschaft, unter Einfluß eines elektrischen Feldes die Orientierung ihrer Kristallbereiche und damit ihre optischen Eigenschaften zu verändern. In der dargestellten Zelle wird z.B. ausgenutzt, daß die flüssigkristalline Substanz, die elektrisch unbeeinflußt die Polarisationsrichtung hindurchtretenden Lichtes dreht, dies unter dem Einfluß eines elektrischen Feldes nicht mehr tut.

Von links einfallendes Licht L, wird durch eine erste Polarisatorschicht P1 linear polarisiert. Bei seinem Durchtritt durch die flüssigkristalline Substanz wird es in Bereichen ohne elektrisches Feld um 90° in seiner Polarisationsrichtung gedreht. Durch die ebenfalls um 90° gegenüber der ersten Polarisatorschicht gedreht orientierte, als Analysator wirkende Polarisatorschicht P2 tritt das Licht nach rechts aus der Zelle aus. Der Zellbereich erscheint hell.

Im Bereich eines elektrischen Feldes - eine der Elektroden der linken Substratplatte ist hierzu über einen Schalter S mit einer Spannungsquelle U verbunden, deren anderer Pol an der gegenüberliegenden Elektrode der rechten Substratplatte an liegt - dreht die flüssigkristalline Substanz die Polarisationsebene des einfallenden Lichtes nicht. Das in der ersten Polarisatorschicht P1 linear polarisierte Licht kann in diesem Bereich UB die Polarisatorschicht P2 nicht durchdringen. Der Bereich UB erscheint dunkel.

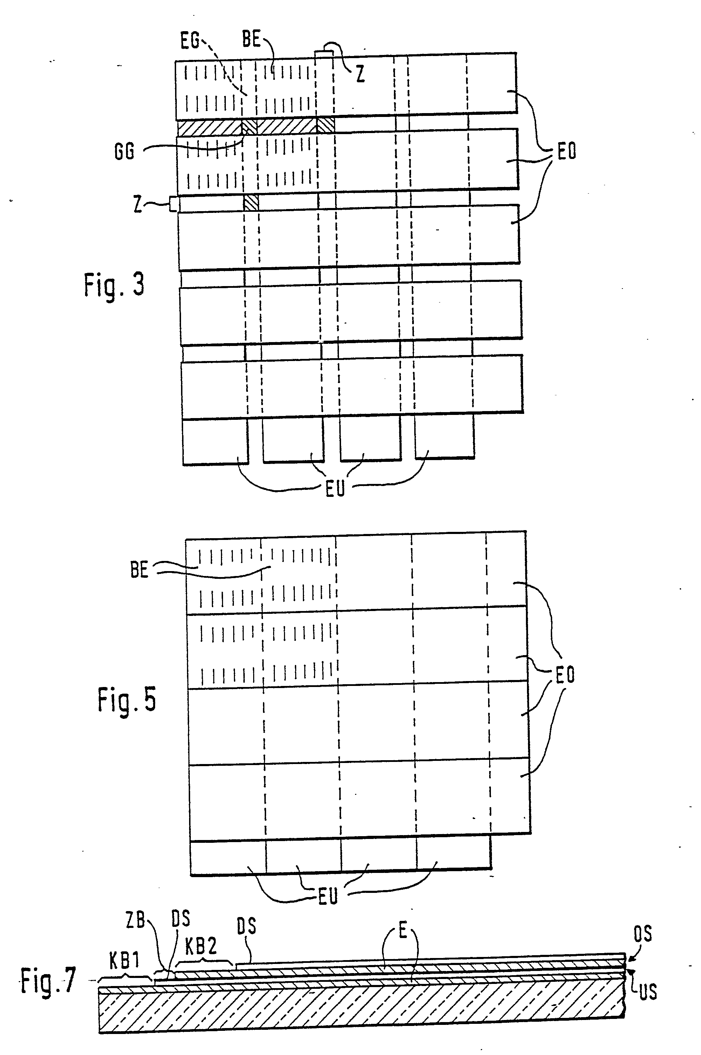

In einem matrixartig betriebenen Flüssigkristalldisplay (Fig. 3) liegen eine große Zahl streifenförmiger Elektroden einander gegenüber, wobei die Längsrichtungen der Elektrodenstreifen der einzelnen Stubstratplatten in der Regel zueinander senkrecht stehen. Kreuzungsbereiche BE der einzelnen Elektrodenstreifen miteinander bilden die Bildpunkte (Pixels) des Displays. Jeder Bildpunkt kann durch Anlegen einer Spannung an die beiden sich an seinem Platz kreuzenden Elektrodenstreifen individuell angesteuert werden.

Wie aus Fig. 2 ersichtlich ist, befinden sich die Elektrodenstreifen E einer Substratplatte SP in einem herkömmlichen Flüssigkristalldisplay in einer Ebene. Da die Streifen elektrisch voneinander isoliert sein müssen, sind nach dem Aufbringen auf die Substratplatte in die zunächst zusammenhängende Elektrodenschicht Zwischenräume Z geätzt worden. Anschließend wurde die empfindliche Elektrodenschicht mit einer Decksubstanz DS (meist SiO₂) abgedeckt.

Die durch Ätzen geschaffenen Zwischenräume Z sind relativ breit. Sie bilden beim fertigen Display sichtbare Zonen, in denen die flüssigkristalline Substanz nicht elektrisch beeinflußt werden kann.

Fig. 3 zeigt schematisch die Verteilung dieser nicht ansteuerbaren Zonen bei einem matrixartig aufgebauten Flüssigkristalldisplay. Neben den steuerbaren Bildelementen BE gibt es Zonen EG in denen einer Elektrode ein Glasstreifen gegenüberliegt und Zonen GG in denen auf bei den Seiten reine Glasschichten einander gegenüberliegen. Die Elektrodenstreifen EO der oberen Substratplatte verlaufen in Fig. 3 von links nach rechts, die Elektrodenstreifen EU der unteren Substratplatte von oben nach unten.

Soll, z.B. um eine höhere Bildauflösung zu erreichen, die Anzahl der Bildelemente BE pro Flächeneinheit erhöht werden, so müssen die Bildelemente BE in Fig. 3 verkleinert werden. Da sich die Zwischenräume Z, wie bereits oben erwähnt, nicht verkleinern lassen, nehmen die elektrisch unbeeinflußbaren Zonen EG, GG einen immer größeren Teil der Gesamtfläche des Displays ein, so daß der Kontrast abnimmt.

Beim Display nach der Erfindung sind, wie Fig. 4 zeigt, die Elektrodenstreifen E in zwei übereinanderliegende Schichten, eine untere Schicht US und eine obere Schicht OS eingelagert. Die Elektroden befinden sich dabei abwechselnd in der unteren oder der oberen Schicht. Die Elektrodenstreifen der oberen Schicht haben exakt die Breite der Lücke zwischen zwei Elektrodenstreifen der unteren Schicht, so daß bei senkrechter Durchsicht durch die Substratplatte, wie Fig. 5 zeigt, jegliche Zwischenräume zwischen den einzelnen Bildelementen verschwinden. Die Isolation zwischen den Elektrodenstreifen wird hier durch eine dünne Decksubstanzschicht DS sichergestellt. Reicht diese Isolation nicht aus, so besteht die Möglichkeit, durch Verschmälern der Elektrodenstreifen einen geringen Zwischenraum vorzusehen, dessen Breite zur Isolation ausreicht, jedoch viel geringer ist als die Breite eines durch Ätzung geschaffenen Zwischenraumes. Er ist mit einer Breite von etwa 1 u optisch nicht erkennbar.

Die Kontaktierung der gemäß Fig. 4 aufgebauten Displays kann in bekannter Weise, z.B. mittels sogenannter Zebragummis, aus abwechselnd leitenden und nichtleitenden Schichten bestehender Gummistreifen, erfolgen. Werden die einzelnen Substratplatten an zwei gegenüberliegenden Seiten kontaktiert, so kann gemäß Fig. 6 entlang einer Seite ein Kontaktbereich KB1 gebildet werden, innerhalb dessen der Schichtenaufbau nach Auftrag und Ätzen der unteren Elektrodenschicht abgebrochen wurde und entlang der gegenüberliegenden Seite ein Kontaktbereich KB2, in dem der Schichtenaufbau bis zum Aufbringen und Ätzen der darüberliegenden Elektrodenschicht weitergeführt wurde. Auf diese Weise können auf der linken Seite die Elektrodenstreifen der unteren Schicht US, auf der rechten Seite die Elektrodenstreifen der oberen Schicht OS kontaktiert werden.

In Fig. 7 ist dargestellt, wie die Kontaktbereiche KB1 und KB2 bei einseitiger Kontaktierung angeordnet sind. Wichtig ist hier ein Zwischenbereich zwischen den Kontaktbereichen, in dem die isolierende Decksubstanz DS der unteren Schicht US oberflächlich ansteht und damit Kurzschlüsse zwischen den Elektrodenstreifen der unteren und der oberen Schicht verhindert werden.

Prinzipiell können die Elektrodenstreifen auch in mehr als zwei Schichten auf einer Substratplatte angeordnet werden. Zu deren Kontaktierung bedarf es dann weiterer Kontaktbereiche, die entsprechend Fig. 7, gestaffelt angelegt werden müssen.

## Ansprüche

1. Flüssigkristalldisplay, mit zwei in bestimmtem Abstand voneinander befindlichen, planparallelen Substratplatten, von denen mindestens eine durchsichtig ist, die eine flüssigkristalline Substanz einschließen und auf ihren einander zugewandten Oberflächen streifenförmig angeordnete, optisch transparente Elektroden tragen, deren Längsachsen mit den Längsachsen der auf der jeweils gegenüberliegenden Substratplatte aufgebrachten Elektroden einen Winkel, vorzugsweise einen Winkel von 90° einschließen, **dadurch gekennzeichnet,** daß die streifenförmig angeordneten Elektroden (E) auf jeder Substratplatte (SP) jeweils abwechselnd und auf Lücke in mindestens zwei übereinanderliegenden isolierenden durchsichtigen Schichten (US, OS) eingelagert sind.

2. Flüssigkristalldisplay nach Anspruch 1, **dadurch gekennzeichnet,** daß die die Elektroden (E) tragenden Oberflächen der Substratplatten (SP) entlang ihrer quer zur Längsrichtung der Elektrodenstreifen verlaufenden Begrenzungen einen ersten Kontaktbereich (KB1) aufweisen, in dem lediglich die in einer unteren der übereinanderliegenden, isolierenden Schichten eingelagerten Elektroden frei zugänglich sind, und mindestens einen weiteren Kontaktbereich (KB2), in dem die in der darüberliegenden isolierenden Schicht eingelagerten Elektroden frei zugänglich sind, und daß im Falle, daß sich beide Kontaktbereiche an derselben Seite einer Substratplatte (SP) befinden, der weitere Kontaktbereich (KB2) gegenüber dem ersten Kontaktbereich (KB1) zur Plattenmitte hin verschoben und durch einen an seiner Oberfläche eine isolierende Decksubstanzschicht (DS) tragenden Zwischenbereich (ZB) von dem ersten Kontaktbereich getrennt ist.

Fig. 1

P1　SP　E　FK　E　SP　P2

L

L

L

UB

L

S

U

Fig. 2

Z　Z　E　DS

SP

Fig. 4

DS　E　E　DS

OS

US

SP

KB1　DS　E　KB2

OS

US

SP　Fig. 6

Fig. 3

Fig. 5

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | JP-A-61 270 729 (TOPPAN PRINTING)(01-12-1986) * Zusammenfassung * & PATENT ABSTRACTS OF JAPAN, Band 11, Nr. 126 (P-569)[2573], 21. April 1987 --- | 1 | G 02 F 1/1343 |
| Y | JP-A-60 146 220 (MATSUSHITA)(01-08-1985) * Figuren 1-3; Zusammenfassung * & PATENT ABSTRACTS OF JAPAN, Band 9, NR. 320 (P-413)[2043], 14. Dezember 1985 --- | 1,2 | |
| A | PATENT ABSTRACTS OF JAPAN, Band 9, Nr. 157 (P-369)[1880], 2. Juli 1985; & JP-A-60 33 533 (MATSUSHITA DENKI SANGYO K.K.) 20-02-1985 * Zusammenfassung * ----- | 1,2 | |

| RECHERCHIERTE SACHGEBIETE (Int. Cl.5) |
|---|
| G 02 F |

Der vorliegende Recherchenbericht wurde für alle Patentansprüche erstellt

| Recherchenort | Abschlußdatum der Recherche | Prüfer |
|---|---|---|
| DEN HAAG | 10-11-1989 | CONRAD V.HEYDENDORFF K. |